# EUROPEAN PATENT SPECIFICATION

(11) **EP 2 181 826 B1**
(45) Date of publication and mention of the grant of the patent: **07.12.2011**
(21) Application number: 09172796.6
(22) Date of filing: 12.10.2009
(51) Int. Cl.: B29C 41/14, B29C 41/22, A41D 19/00, D06N 3/00

(54) **Production of coated gloves**
Herstellung von beschichteten Handschuhen
Production de gants revêtus

(30) Priority: 28.10.2008 US 259656; 23.04.2009 US 428668
(43) Date of publication of application: 05.05.2010
(73) Proprietor: Midas Safety Inc., Toronto ON M3B 3H9 (CA)
(72) Inventor: Kassam, Mikhail, Toronto Ontario M3B 2J2 (CA); Jaffer, Akil, Markham Ontario L3R 4S3 (CA)
(74) Representative: Knowles, James Atherton

(56) References cited:
- WO-A1-2007/070131
- US-A- 4 569 707
- US-A1- 2004 221 364
- US-A1- 2007 204 381

## Description

### Field of the Invention

The present invention relates to methods for producing coated gloves.

### Background of the Invention

Gloves can provide important protection to the hands in many industrial or household tasks. Often such tasks are performed in fluid environments where not only protection from such materials as water, aqueous solutions of various degrees of alkalinity or acidity, oil, gasoline or similar materials is required, but also an ability to grip and securely hold or maneuver an object is necessary. For such purposes, the gloves should be comfortable, flexible, and provide a grip surface capable of secure grip even when exposed to materials having lubricity which would adversely affect an ability to securely grip an object. Breathability can often also be advantageous.

Johnson (U.S. 4,589,940) describes methods for preparing slip resistant articles such as work gloves by laminating a foamed material to a substrate. The foamed material may be polyurethane, polyvinyl chloride, acrylonitrile, natural rubber or synthetic rubber and the level of foam is adjusted according to the required degree of abrasion resistance.

Watanabe (U.S. 4,497,072) describes a method for making a porous hand covering by coating a fabric glove base with a foamed rubber or resin and subjecting the foam coated glove base to sufficiently reduced pressure to cause bursting of the foam bubbles to form a coating surface with a plurality of depressions.

Heeter et al. (U.S. 5,322,729) describes a method and apparatus for producing a breathable coated fabric. The method includes coating a fabric substrate with a resin then opening pores in the resin by directing a flow of air through the fabric substrate and resin coating.

Yamashita et al. (U.S. 6,527,990) describes a method to produce a rubber glove by sequentially performing the step of immersing a glove mold in a coagulating synthetic rubber latex containing synthetic rubber in latex form, thermally expandable microcapsules, and a rubber coagulant to form a coagulant-containing synthetic rubber film on the surface of the glove mould; the step of immersing the glove mold in rubber-incorporating latex to form a gelled rubber layer; the step of heating a rubber laminate composed of the synthetic rubber film and the gelled rubber layer to vulcanize the rubber laminate; and the step of turning the vulcanized rubber laminate inside out, and removing it from the glove mold.

Borreani et al. (U.S. 2002/0076503) describes a clothing article such as a glove characterized in that: the textile support receives an adherence primer in the form of an aqueous calcium nitrate; the textile support with the adherence primer is subjected, entirely or partially, to a coating based on a foamed aqueous polymer; the foamed aqueous polymer only appears on the support outer part without going through the mesh so as not to produce contact with the corresponding part of the body.

Dillard et al. (U.S. 2004/0221364) describes methods, apparatus, and articles of manufacture for providing a foam glove, including coating a textile shell with a foamed polymeric coating that is supported in part by the surface of the textile shell. Sufficient amount of air is mixed with the base polymer to lower the density of the base polymer to between about 10 to 50 % of the original density of the base polymer.

Flather et al. (U.S. 2005/0035493) describes a glove having a textured surface or textured foam coating produced by embedding a layer of discrete particles, such as salt, into a previously formed liquid layer, gelling or curing the layer and dissolving the discrete particles to leave a textured or textured foamed surface.

Thompson et al. (U.S. 2007/0204381) describes a lightweight thin flexible latex glove article having a polymeric latex coating.

WO-A 20071070131 discloses elastomeric articles such as gloves with a primary matrix and a foam donning layer.

US-B-4569707 discloses methods for producing a laminate having an improved ship and/or skid resistant surface suitable for work gloves.

There is, however, a need for a facile and economical method to manufacture a glove having improved grip, especially water and oil grip.

It is an aim of the present invention to address that need.

### Summary of the Invention

The present invention accordingly provides a method for producing a coated glove, the method comprising, providing a glove liner, applying a dispersion of a polymeric material to at least a portion of the glover liner, and applying a foamed solution comprising a surfactant, a tenside or an aerosol to at least a portion of the polymeric material applied to the glove liner.

The invention is advantageous because it provides a method of producing a glove with improved grip, especially water and oil grip, that may be flexible, breathable, and/or may be liquid proof.

The method provides a method that produces a glove having a spongy coating which allows a desired dexterity and grip.

An important aspect of the present invention is the creation of a polymeric material layer having foam characteristics without the use of a foamed dispersion of the polymeric material itself. The foam characteristics are provided by the application of a foam layer of a foamed solution such that the foam layer impinges against the polymeric material layer (preferably when still wet and/or not fully cured), creating a foamed appearance to the polymeric material. It is thought (without wishing to be bound) that the bubbles of the foam push against the polymeric material layer to create impressions, thus giving the polymeric material layer characteristics of a foamed layer.

Preferably, the method further comprises treating the glove liner with an electrolyte solution before applying the dispersion of a polymeric material.

This is advantageous because the electrolyte solution may act as a coagulant. As the dispersion of a polymeric material contacts electrolyte in or on the liner it may coagulate or gel due to the influence of the electrolyte.

The electrolyte solution may completely or incompletely penetrate the thickness of the liner.

The, optional, initial electrolyte treatment may be accomplished by any desired method, including, but not limited to, dipping, spraying, contact transfer such as by a sponge, etc. Preferably, the electrolyte treatment is accomplished by dipping the liner into a tank containing a solution of the electrolyte. Alternatively, a solution of the electrolyte may be spray coated on to the liner.

After application of the electrolyte solution to the liner, preferably the method involves at least partially drying the liner to remove at least a portion of the solvent, while retaining electrolyte within the penetrated depth of the liner.

The electrolyte solution preferably comprises a coagulating solution. Preferably, the coagulating solution comprises one or more members selected from organic acids, inorganic acids, alkali metal salts, alkaline earth metal salts, or transition metal salts. The organic acid may comprise formic acid, citric acid, or acetic acid. The preferred electrolyte is selected from acetic acid, citric acid, formic acid, calcium salts (e.g. calcium nitrate or calcium chloride). The most preferred electrolyte is selected from calcium nitrate or acetic acid.

Preferably, the electrolyte is dissolved in water, an alcohol or an aqueous alcohol mixture. Preferred alcohols are those having 1 to 12 carbons. Preferably alcohols having 1-6 carbons and most preferably alcohols having 1-4 carbon atoms are used. For application, the electrolyte solution may be foamed or non-foamed, preferably non-foamed.

The electrolyte solution may completely or incompletely penetrate the thickness of the liner.

Preferably, in the method the glove liner is fitted on to a mould (also known as a former). Preferably, the mould is inserted into the glove liner (which is preferably hand-shaped and hand-sized) to form a substrate treatment unit. The mould may be constructed of any material suitable for this purpose which is stable to the treatment chemicals and temperatures employed in the process to which the mould is to be exposed. For purposes of description clarity herein, a mould to which the glove liner is fitted by insertion of the mould into the liner may be referred to in this specification as the "substrate treatment unit" and may be referred to as the "unit" or "treatment unit."

The liner of the present invention may be prepared from any appropriate flexible material. The choice of material selected will depend upon the end requirements of the glove and the utility for which the glove is intended. Comfort and designed resistance to cutting, puncturing and abrasion must be considered when selecting the material of construction for the liner.

Any suitable flexible material may be selected as the yarn for the liner and suitable materials include, for example, cotton, polycotton, steel, glass, polyaramid, wool, polyamide, high tenacity polyamide, polyester, polyethylene, ultra high molecular weight polyethylene (UHMWPE), bamboo fiber, silver, carbon, copper, spandex, lycra, acrylic, polyvinyl alcohol, hemp, Vectron or combinations of any of these materials. An example of a preferred polyaramid is Kevlar® while fibers sold under the trade name Dyneema® is a preferred UHMWPE.

Yarns of these materials may be formed into the fabric of the liner by any method known in textile art. Suitable liners include, but are not limited to, knitted, woven, non-woven and fiber flock (flocculated fibers) liners, preferably knitted. These yarns may be treated with anti-microbial agents and/or nanotechnology methods.

The liner is preferably knitted with large hook needles such as a 15 gauge needle. The dtex of the yarn is in the range of from 111 to 5000 (100 to 4500 den), preferably 111 to 667 (100 to 600 den) and most preferably 311 to 467 (280 to 420 den). The yarn may be passed through a bath of silicone free mineral oil to provide lubricity to the needle latches during the knitting process.

Generally in the knitting of the preferred liner, the stitch density of the glove is set and controlled by adjustment of the stitch control motor. The stitch density at all knuckle joints may be relaxed to allow flexibility for finger movement. At the lower palm the stitch density may be tightened gradually to conform with the shape of a hand. The finger tip portion of the glove may be rounded by electronic control of the knitting process.

The dispersion of a polymeric material is preferably a dispersion that forms a film of the polymeric material. The polymeric material is preferably an elastomer, especially a rubber material.

The polymeric material of the polymeric dispersion may be at least one of natural rubber, nitrile rubber, synthetic polyisoprene, styrene-butadiene copolymer, acrylonitrile-butadiene copolymer, carboxylated acrylonitrile-butadiene copolymer, polychloroprene, polyacrylate, butyl rubber, polyvinyl chloride, polyvinyl acetate, polyethylene, water- based polyester-based polyurethane, water-based polyether-based polyurethane, cross-linked sodium carboxymethylcellulose and solvent based polyurethane. A mixture of polymeric materials may be used, including two or more selected from the above list.

The dispersion of the polymeric material is preferably non-foamed.

The solids content of the dispersion is preferably in the range from 10 to 70 % by weight, more preferably 20 to 60 % by weight, and most preferably 25 to 45 % by weight. The dispersion may have one or more additives to promote curing, including compounds such as sulphur, zinc oxide and metal alkyl carbamates or other compounds. The dispersion may contain other ingredients including those conventionally known in the art. The other ingredients may include dispersing agents, thickeners, rheology control agents, surfactants (e.g. to modify the surface tension and hence wetting ability of the dispersion), anti-microbial agents and fillers.

The viscosity of the polymeric dispersion may be controlled by adjustment of the solids content, dispersing agents, additives such as thickeners and/or rheology control agents and dispersion medium. A viscosity of the dispersion may be adjusted to be in the range of 0.1 to 20 Pas (100 to 20000 centipoise), preferably 0.25 to 15 Pas (250 to 15000 centipoise), and most preferably 0.5 to 3 Pas (500 to 3000 centipoise). The viscosity may be adjusted to assist the control of the depth of penetration of the polymer dispersion into the liner.

When the dispersion of the polymeric material is applied to the treated glove liner (preferably the electrolyte-treated glove liner), the dispersion will penetrate the liner to a depth determined by the viscosity of the polymer dispersion, the length of time the treatment unit remains in the dipped state and, where present, the concentration of electrolyte at a given depth into the glove liner. As the polymeric dispersion penetrates it may coagulate or gel, including due to the influence of the electrolyte, where present, and deeper penetration is diminished.

The method is arranged such that, owing to coagulation of the dispersion of the polymeric material in and on the glove liner (which may be increased by the optional electrolyte solution step), preferably at least 20 % of the interior of the glove liner substrate is not penetrated to the skin contacting surface more preferably at least 50 % of the interior is not penetrated to the skin contacting surface, most preferably at least 80% is not penetrated to the skin contacting surface and ultimately preferred, substantially no penetration to the skin contacting surface occurs.

Since with increasing distance of the polymeric material from the surface of the liner the opportunity to coagulation significantly decreases, the extent of gelling also gradually decreases with distance from the liner so that the outer surface of the polymeric material generally remains only partially gelled or not gelled.

In an alternative embodiment of the present invention, the method further comprises a step, prior to the step of applying the dispersion of a polymeric material, of coating the glove liner with a low permeability polymeric coating, preferably a polymeric coating substantially impermeable to oils. In this embodiment, a two layer liner is formed: the first layer being of the material of the glove liner and the second a pre-coating layer of low permeability. In this embodiment, prior to the step of applying the dispersion of the polymeric material, the glove liner (which may be at least partially dried electrolyte solution coated) fitted on to a glove mould is coated with an airless latex dip to form a layer of low permeability to oils and chemicals. Such a dip is described, for example, in US Patent 7,310,826.

The foamed solution comprises a solution of a surfactant, a tenside or an aerosol. The surfactant may be an anionic, cationic or neutral surfactant.

The surfactant, tenside and/or aerosol may be any such chemicals known to one of skill in the art. Examples include, for example, sodium linear alkyl benzenesulfonates, quaternary ammonium salts, carboxylates, sulfates, betaines, fatty acids and poly glycol ethers. Combinations of these may be employed as determined by one of skill in the art in order to achieve selected and desired effects on the polymer coating.

The surfactant, tenside and/or aerosol solution may be in water or aqueous alcohol mixtures, preferably in water. In the case of aqueous alcohol mixtures, preferably alcohols having 1-12 carbons are used. More preferably alcohols having 1-6 carbons and most preferably alcohols having 1-4 carbon atoms are used. Methanol, ethyl alcohol, propanol (either n-propanol or isopropanol) are most preferred. The alcohol water composition may be of any water alcohol ratio depending on the surfactant, tenside or aerosol used and the desired effect on the polymeric material.

The foamed surfactant, tenside and/or aerosol solution may contain a soap and a gelling aid such as cellulose or a cellulose derivative. Benzyl alcohol may be added to assist stabilization and to make grooves which can hold gases.

Preferably, the method further comprises, after the step of applying the foamed solution, a step of treating the coated glove with an electrolyte solution (in embodiments where the optional first electrolyte treatment is used, this is a second electrolyte treatment).

The (second) electrolyte treatment may be accomplished by dipping the treatment unit into a tank containing a solution of the electrolyte. The length of time of the dipping may range from 1 to 20 seconds, preferably 1 to 15 seconds and most preferably 1 to 5 seconds.

Suitable electrolytes include organic acids, for example, formic acid, citric acid and acetic acid, inorganic acids, alkali metal salts, alkaline earth metal salts and transition metal salts. Combinations of these electrolytes may be used. Preferred electrolytes are acetic acid, citric acid, formic acid, calcium nitrate and calcium chloride.

The electrolyte may be dissolved in water, an alcohol or an aqueous alcohol mixture. Preferred alcohols are those having 1 to 12 carbons. Preferably alcohols having 1-6 carbons and most preferably alcohols having 1-4 carbon atoms are used. For application to the treatment unit the electrolyte solution may be foamed or non-foamed. Foaming may be accomplished as described above.

A change in the appearance of the surface of the polymeric coating may be observed during or as a result of the dipping treatment in the electrolyte bath if used after application of the foamed layer. A physical and/or chemical reaction appears to occur in the electrolyte bath and can be observed at the interface. As a result of this reaction, further fine cavities and pores are created in the polymeric coating. The formed pores may extend the entire depth of the polymer coating and provide for the breathability of the glove when construction is complete. The cavities formed on the surface of the polymeric coating provide even better grip even in slippery environments such as water, oil or grease.

Following the electrolyte treatment the treatment units may be hung horizontally or vertically to allow drainage of the liquid treatment solutions.

After the step of applying the foamed solution (and after the optional (second) electrolyte treatment), the treated glove liner may be placed in a diffusion bath. The unit may be placed in a diffusion bath (also known as a leaching bath) for one to sixty minutes (usually around 20 to 40 minutes) in order to remove water-soluble residuals. Such residuals may include electrolytes, surfactants and/or other additives used to promote the formation of the coating morphology.

Preferably, the method involves a step of curing the treated glove, preferably by heating the treated glove to a predetermined temperature. Heating the treated glove liner, preferably takes place after any optional diffusion/leaching bath treatment. Preferably, the predetermined temperature is 60 to 140°C, preferably 70 to 130°C, and most preferably 80 to 120°C, to fully cure the polymer coating.

The glove liner substrate and applied, cured polymeric coating may then be removed from the mould to obtain a semi-finished glove, which may be washed in an alcoholic bath and/or an aqueous bath.

The washed, semi-finished glove may be coated with a fluorochemical composite dispersion. This is advantageous because it provides a water resistant coating.

The obtained polymeric coating on the glove liner substrate may range from about 0.05 mm to 5.5 mm in thickness depending on the desired degree of protection and flexibility. A preferred range of thickness is 0.25 mm to 4.0 mm and a most preferred range is 0.3 to 3.7 mm.

The cavities and pores formed in and on the coating are randomly, but uniformly distributed on the surface and throughout the depth of the coating. A large range of cavity and pore density in the polymeric coating is possible depending on the nature, concentration, viscosity and surface tension of the dispersion of the polymeric material, the nature, concentration, viscosity and surface tension of the foamed solution the length of treatment steps and other parameters of the steps of the method. The cavity and pore density also depends on the concentration of the salts in the optional electrolyte solution and the optional post treatments in the diffusion bath and the concentration, length of treatment and treatment temperature of the electrolyte.

The treatment conditions described in the previous paragraph may be varied and controlled to achieve a desired coating morphology by one of skill in the art.

According to the claimed invention gloves capable of absorbing one milliliter of water in a range of from 1 second to 300 seconds, preferably 1 second to 250 seconds and most preferably 1 second to 120 seconds, may be produced. The same gloves are capable of absorbing one milliliter of oil in a range of from 5 seconds to 500 seconds, preferably 50 seconds to 450 seconds and most preferably 250 seconds to 400 seconds.

In a second aspect, the present invention provides a method for preparing a flexible, liquid absorbent coated glove, comprising :
coating a glove liner fitted onto a glove mould, with a foamed or non-foamed electrolyte solution;
at least partially drying the coated glove liner fitted onto a glove mould;
applying a non-foamed dispersion of a polymeric material to a selected portion of the dried electrolyte solution coated glove liner fitted onto a glove mould, by immersion in tank(s) containing the non-foamed dispersion(s) of polymeric material, with or without applying foamed or non-foamed electrolyte solution(s) with some intermediate stages of gelling, so that the polymeric material penetrates partially through a thickness of the glove liner and for at least a portion of the liner, the polymeric material does not fully penetrate the glove liner;
coating the polymeric material treated area of glove liner fitted onto a glove mould with a foam layer of a solution comprising at least one selected from the group consisting of a surfactant, a tenside and an aerosol;
applying an aqueous or alcoholic solution of an electrolyte;
placing the treated glove liner in a diffusion bath;
heating the treated glove liner, after removal from the diffusion bath, to a temperature to vulcanize or to stabilize the polymeric coating to form a glove comprising a liner adhered to polymer cured coating fitted onto a glove mould.

Prior to the step of applying the non-foamed polymeric material, the at least partially dried electrolyte solution coated glove liner fitted onto a glove mould is preferably coated with an airless latex dip to form a layer impermeable to oils and chemicals.

Preferably, the glove liner is a member selected from the group consisting of knitted glove liners, woven glove liners, non-woven glove liners and glove liners formed from fiber flock.

Preferably, the glove liner is a knitted glove liner.

Preferably, the knitted glove liner comprises a yarn of a tex (denier) in the range of from 11.1 to 500 tex (100 to 4500), having a plurality of stitches.

Preferably, the method further comprises applying to an outer surface of the glove comprising a liner adhered to polymer cured coating, fitted onto a glove mould, a fluorochemical composite dispersion; and heating to dry and cure the applied fluorochemical composite dispersion.

Preferably, the glove liner is formed from a natural or synthetic yarn or a combination thereof.

Preferably, the glove liner comprises at least one yarn selected from the group consisting of cotton, polycotton, steel, glass, polyaramid, wool , polyamide ,polyester, polyethylene, UHMWPE, Bamboo fiber, silver fiber, carbon fiber, copper fiber, spandex, lycra, acrylic, High tenacity Polyamide, PVA, Hemp and Vectron.

Preferably, the polymeric material of the applied dispersion is at least one member selected from the group consisting of natural rubber, nitrile rubber, synthetic polyisoprene, Styrene-butadiene copolymer, carboxylated or non-carboxylated acrylonitrile-butadiene copolymer, polychloroprene, polyacrylate, butyl rubber, polyvinyl chloride, Polyvinylacetate, Polyethylene, polyester, polyurethane, polyether, sodium carboxymethylcellulose and combinations thereof.

Preferably, a solids content of the dispersion of polymeric material is in the range from 10 to 70 % by weight.

Preferably, a viscosity of the dispersion of a polymeric material is in a range of from 0.2 to 4 Pas (200 to 4000 centipoise).

Preferably the surfactant, tenside and aerosol is at least one member selected from the group consisting of a sodium linear alkyl benzenesulfonate, a quaternary ammonium salt, a carboxylate, a sulfate, a betaine, a fatty acid and a polyglycol ether.

Preferably, fine pores and cavities are formed in the polymeric coating of the substrate glove liner by a chemical and/or physical reaction due to interaction of the electrolyte solution with the polymeric material coated with the foam layer of a solution comprising at least one selected from the group consisting of a surfactant, a tenside and an aerosol.

Preferably, the polymeric coating applied to the substrate glove liner ranges from 0.05 mm to 5.5 mm in thickness.

### Description of the Preferred Embodiments

Embodiments of the invention will now be described with reference to the following, non-limiting Example in which a coated glove was prepared according to the invention.

The method of coating of the glove involved the following

A glove liner of 0.444 to 7.78 tex (4 by 70 denier) Nylon (13 to 15 gauge) was fitted on to an aluminium glove mould (also known as a former). The mould/former and liner were dipped in a calcium nitrate solution in methanol.

The dipped glove liner and mould were partially air dried at room temperature.

A (non-foamed) aqueous dispersion of a polymeric material containing nitrile rubber (NVT supplied by Polymer Latex) was prepared and the glove liner was immersed in a tank containing the dispersion. The polymeric material penetrated partially through a thickness of the glove liner and for at least a portion of the liner.

The polymeric material treated area of glove liner was then treated with a foam layer of an aqueous solution of an anionic surfactant (20% by weight Calsoft supplied by Pilot Chemicals).

The treated glove liner was dipped in a calcium nitrate solution.

The treated glove liner was placed in a leaching/diffusion bath for 30 minutes.

The treated glove liner, after removal from the leaching bath, was heated to a temperature of 80 to 120°C to cure/vulcanize the nitrile coating to form a glove comprising a liner adhered to nitrile rubber. The thickness of the nitrile layer was in the range of 0.6 to 0.9 mm. Clearly, thicker (or thinner) coatings can be applied if desired.

The glove was removed from the mould and washed in alcohol/water and allowed to dry.

The properties of the glove (NFT Coating) were compared to commercially available gloves as shown in table 1. Sample 5 (the NFT glove according to the invention) had neither a fluorocarbon coating nor a latex underlayer (i.e. between the liner and the nitrile rubber layer). A fluorocarbon coating is advantageous because it provides water repellency. A latex (or other essentially impermeable underlayer) is advantageous because it provides a liquid-proof glove.

The ratings indicated in Table 1 for grip testing are qualitative and are based on an assessment wherein an individual wearing the glove to be tested, gripped a portion of a one inch diameter test rod which had been dipped in the test medium (water or oil). A second individual, holding a clean portion of the rod, then pulled the rod from the grip held by the glove. The individual who held the rod in the test glove assigned a number represented by the number of "*'s" in the Table, which correlated with the amount of gripping effort required to hold the rod. The higher number of "*", the greater the grip afforded by the glove as assessed by the individual who held the rod in the test glove.

The permeability test was performed by holding a test portion of a glove horizontally and placing one milliliter of the test liquid (water or oil) on the outer surface of the glove. The amount of time required for the liquid to seep from the outer surface side to the inner surface was recorded.

**TABLE 1**

| Sample | Glove | Dry Grip Metal Rod | Dry Grip Glass Rod | Wet Grip Metal Rod | Wet Grip Glass Rod | Oil Grip Metal Rod | Oil Grip Glass Rod | Water Permeability | Oil Permeability |
|---|---|---|---|---|---|---|---|---|---|
| 1 | NINJA-X (Midas) | ***** | ***** | **** | * | *** | ** | 15 sec/ml | 135 sec/ml |
| 2 | TOP FLEX (Midas) | ***** | ***** | **** | * | *** | ** | 15 sec/ml | 150 see/ml |
| 3 | NITRILON FLEX (Midas) | **** | **** | *** | Nil | ** | *** | 15 sec/ml | 360 sec/ml |
| 4 | NITRILON (Midas) | ***** | ***** | Nil | Nil | Nil | Nil | Didn't pass through | Didn't pass through |
| 5 | NTF Coating (Invention) | ***** | ***** | ***** | ** | *** | ** | 11 sec/ml | 104 sec/ml |
| 6 | MAX] FLEX (ATG Ceylon) | *** | *** | ***** | Nil | Nil | **** | Didn't pass through | Didn't pass through |
| 7 | HyFlex^{®} 11-920 (Ansell) | ***** | **** | ** | Nil | * | Nil | 840 sec/ml | Didn't pass through |

As shown by the data in Table 1, the gloves according to the claimed invention provide overall better grip capability for a metal or glass rod coated with water or oil while simultaneously providing good permeability in comparison with conventional commercial similar style work gloves.

While the invention has been described by the specific embodiments, it is evident that alternatives, modifications and variations thereof, within the scope of the claimed invention, will be apparent to those skilled in the art. The embodiments are exemplary and should not be interpreted to be limiting in scope. Accordingly, all alternatives, modifications and variations which are within the scope of the appended claims are embraced herein.

## Claims

1. A method for producing a coated glove, the method comprising,
a) providing a glove liner,
b) applying a dispersion of a polymeric material to at least a portion of the glover liner, and
c) applying a foamed solution comprising a surfactant, a tenside or an aerosol to at least a portion of the polymeric material applied to the glove liner.

2. A method as claimed in claim 1, further comprising treating the glove liner with an electrolyte solution before applying the dispersion of a polymeric material.

3. A method as claimed in either claim 1 or claim 2, wherein the electrolyte solution comprises a coagulating solution and, preferably, comprises one or more members selected from organic acids, inorganic acids, alkali metal salts, alkaline earth metal salts, or transition metal salts.

4. A method as claimed in any one of the preceding claims, wherein the glove liner is fitted on to a mould.

5. A method as claimed in any one of the preceding claims, wherein the dispersion of the polymeric material comprises at least one member selected from natural rubber, nitrile rubber, synthetic polyisoprene, styrene-butadiene copolymer, carboxylated or non-carboxylated acrylonitrile-butadiene copolymer, polychloroprene, polyacrylate, butyl rubber, polyvinyl chloride, polyvinylacetate, polyethylene, polyester, polyurethane, polyether, sodium carboxymethylcellulose or combinations thereof.

6. A method as claimed in any one of the preceding claims, wherein the solids content of the dispersion of a polymeric material is in the range of 10 to 70% by weight.

7. A method as claimed in any one of the preceding claims, wherein a viscosity of the dispersion of a polymeric material is in the range of 0.2 Pas (200 centipoise) to 4 Pas (4000 centipoise).

8. A method as claimed in any one of the preceding claims, further comprising a step, prior to the step of applying the dispersion of a polymeric material, of coating the glove liner with a low permeability polymeric coating, preferably a polymeric coating substantially impermeable to oils.

9. A method as claimed in any one of the preceding claims, wherein at least one member is selected from the group consisting of a sodium linear alkyl benzenesulfonate, a quaternary ammonium salt, a carboxylate, a sulphate, a betaine, a fatty acid and a polyglycol ether.

10. A method as claimed in any one of the preceding claims, further comprising,
d) treating the coated glove with an electrolyte solution.

11. A method as claimed in any one of the preceding claims, further comprising a step of curing the coated glove, preferably by heating the coated glove to a predetermined temperature.

12. A method as claimed in any one of the preceding claims, further comprising applying a fluorochemical composite dispersion to the coated glove.

13. A method as claimed in any one of the preceding claims, wherein the thickness of the polymeric material coating is 0.05 mm to 5.5 mm.

## Patentansprüche

1. Verfahren zur Herstellung eines beschichteten Handschuhs, wobei das Verfahren Folgendes umfasst,:
a) Bereitstellen eines Innenhandschuhs,
b) Aufbringen einer Dispersion eines polymeren Materials auf mindestens einen Teil des Innenhandschuhs und
c) Aufbringen einer geschäumten Lösung, die einen oberflächenaktiven Stoff, ein Tensid oder ein Aerosol umfasst, auf mindestens einen Teil des polymeren Materials, das auf den Innenhandschuh aufgebracht wurde.

2. Verfahren nach Anspruch 1, das weiterhin das Behandeln des Innenhandschuhs mit einer Elektrolytlösung umfasst, bevor die Dispersion eines polymeren Materials aufgebracht wird.

3. Verfahren nach Anspruch 1 oder 2, wobei die Elektrolytlösung eine Koagulationslösung umfasst und vorzugsweise ein oder mehrere Elemente umfasst, das bzw. die aus organischen Säuren, anorganischen Säuren, Alkalimetallsalzen, Erdalkalimetallsalzen oder Übergangsmetallsalzen ausgewählt ist bzw. sind.

4. Verfahren nach einem der vorhergehenden Ansprüche, wobei der Innenhandschuh an eine Form angepasst wird.

5. Verfahren nach einem der vorhergehenden Ansprüche, wobei die Dispersion des polymeren Materials mindestens ein Element umfasst, das aus Naturkautschuk, Nitrilkautschuk, synthetischem Polyisopren, Styrol-Butadien-Copolymer, carboxylgruppenhaltigem oder keine Carboxylgruppen enthaltendem Acrylnitril-Butadien-Copolymer, Polychloropren, Polyacrylat, Butylkautschuk, Polyvinylchlorid, Polyvinylacetat, Polyethylen, Polyester, Polyurethan, Polyether, Natriumcarboxymethylcellulose oder Kombinationen davon ausgewählt ist.

6. Verfahren nach einem der vorhergehenden Ansprüche, wobei der Feststoffgehalt der Dispersion eines polymeren Materials im Bereich von 10 bis 70 Gew.-% liegt.

7. Verfahren nach einem der vorhergehenden Ansprüche, wobei eine Viskosität der Dispersion eines polymeren Materials im Bereich von 0,2 Pas (200 Centipoise) bis 4 Pas (4000 Centipoise) liegt.

8. Verfahren nach einem der vorhergehenden Ansprüche, das weiterhin vor dem Schritt des Aufbringens der Dispersion eines polymeren Materials einen Schritt des Beschichtens des Innenhandschuhs mit einer polymeren Beschichtung mit geringer Durchlässigkeit, vorzugsweise einer polymeren Beschichtung, die für Öle im Wesentlichen undurchlässig ist, umfasst.

9. Verfahren nach einem der vorhergehenden Ansprüche, wobei mindestens ein Element aus der Gruppe bestehend aus einem Natriumlinearalkylbenzolsulfonat, einem quartären Ammoniumsalz, einem Carboxylat, einem Sulfat, einem Betain, einer Fettsäure und einem Polyglykolether ausgewählt ist.

10. Verfahren nach einem der vorhergehenden Ansprüche, das weiterhin Folgendes umfasst:
d) Behandeln des beschichteten Handschuhs mit einer Elektrolytlösung.

11. Verfahren nach einem der vorhergehenden Ansprüche, das weiterhin einen Schritt des Härtens des beschichteten Handschuhs umfasst, vorzugsweise durch Erhitzen des beschichteten Handschuhs auf eine vorher festgelegte Temperatur.

12. Verfahren nach einem der vorhergehenden Ansprüche, das weiterhin das Aufbringen einer Fluorchemikalien-Verbunddispersion auf den beschichteten Handschuh umfasst.

13. Verfahren nach einem der vorhergehenden Ansprüche, wobei die Stärke der Beschichtung aus dem polymeren Material 0,05 mm bis 5,5 mm beträgt.

## Revendications

1. Procédé de production d'un gant enduit, le procédé comprenant l'étape consistant à,
a) fournir une doublure de gant,
b) appliquer une dispersion d'un matériau polymère sur au moins une partie de la doublure de gant, et
c)appliquer une solution foamée comprenant un tensioactif, un agent de surface ou un aérosol sur au moins une partie du matériau polymère appliqué sur la doublure de gant.

2. Procédé tel que revendiqué à la revendication 1, comprenant en outre l'étape consistant à traiter la doublure de gant avec une solution électrolytique avant d'appliquer la dispersion d'un matériau polymère.

3. Procédé tel que revendiqué soit à la revendication 1, soit à la revendication 2, dans lequel la solution électrolytique comprend une solution de coagulation, et, de préférence, comprend un ou plusieurs éléments sélectionnés parmi des acides organiques, des acides minéraux, des sels de métaux alcalins, des sels de métaux alcalinoterreux, ou des sels de métaux de transition.

4. Procédé tel que revendiqué dans l'une quelconque des revendications précédentes, dans lequel la doublure de gant est ajustée sur un moule.

5. Procédé tel que revendiqué dans l'une quelconque des revendications précédentes, dans lequel la dispersion du matériau polymère comprend au moins un élément sélectionné parmi du caoutchouc naturel, du caoutchouc nitrile, du polyisoprène synthétique, un copolymère de styrène et de butadiène, un copolymère d'acrylonitrile et de butadiène carboxylé ou non carboxylé, du polychloroprène, du polyacrylate, du caoutchouc butylique, du poly(chlorure de vinyle), du poly(acétate de vinyle), du polyéthylène, du polyester, du polyuréthane, du polyéther, de la carboxyméthylcellulose de sodium ou des combinaisons de ceux-ci.

6. Procédé tel que revendiqué dans l'une quelconque des revendications précédentes, dans lequel la teneur en solides de la dispersion d'un matériau polymère est dans la gamme de 10 à 70 en poids.

7. Procédé tel que revendiqué dans l'une quelconque des revendications précédentes, dans lequel une viscosité de la dispersion d'un matériau polymère est dans la gamme de 0,2 Pa·s (200 centipoises) à 4 Pa·s (4000 centipoises).

8. Procédé tel que revendiqué dans l'une quelconque des revendications précédentes, comprenant en outre, avant l'étape consistant à appliquer la dispersion d'un matériau polymère, une étape consistant à enduire la doublure de gant d'un enduit polymère faiblement perméable, de préférence un enduit polymère essentiellement imperméable aux huiles.

9. Procédé tel que revendiqué dans l'une quelconque des revendications précédentes, dans lequel au moins un élément est sélectionné parmi le groupe constitué d'un benzènesulfonate d'alkyle à chaîne droite sodique, d'un sel d'ammonium quaternaire, d'un carboxylate, d'un sulfate, d'une bétaine, d'un acide gras et d'un éther polyglycolique.

10. Procédé tel que revendiqué dans l'une quelconque des revendications précédentes, comprenant en outre l'étape consistant à,
d)traiter le gant enduit d'une solution électrolytique.

11. Procédé tel que revendiqué dans l'une quelconque des revendications précédentes, comprenant en outre une étape consistant à polymériser le gant enduit, de préférence en chauffant le gant enduit à une température prédéterminée.

12. Procédé tel que revendiqué dans l'une quelconque des revendications précédentes, comprenant en outre l'application d'une dispersion composite de composés fluorés sur le gant enduit.

13. Procédé tel que revendiqué dans l'une quelconque des revendications précédentes, dans lequel l'épaisseur de l'enduit de matériau polymère est de 0,05 mm à 5,5 mm.
